# EUROPÄISCHE PATENTSCHRIFT

(11) **EP 0 748 528 B1**
(45) Veröffentlichungstag und Bekanntmachung des Hinweises auf die Patenterteilung: **13.10.1999**
(21) Anmeldenummer: 95908863.4
(22) Anmeldetag: 24.02.1995
(51) Int. Cl.: H01R 31/06, H04M 1/02

(54) **ADAPTER FÜR INTERNATIONALE DATENFERNÜBERTRAGUNG**
ADAPTER FOR INTERNATIONAL DATA TRANSMISSION
ADAPTATEUR POUR LA TRANSMISSION INTERNATIONALE DE DONNEES

(30) Priorität: 03.03.1994 CH 62094
(43) Veröffentlichungstag der Anmeldung: 18.12.1996
(73) Patentinhaber: Guyaz, Robert A., 6362 Stansstad (CH)
(72) Erfinder: Guyaz, Robert A., 6362 Stansstad (CH)
(74) Vertreter: Felber, Josef
(86) Internationale Anmeldenummer: CH9500040
(87) Internationale Veröffentlichungsnummer: WO9524063

(56) Entgegenhaltungen:
- DE-A- 3 522 582
- DE-A- 3 941 398
- DE-U- 9 002 958
- GB-A- 2 255 694
- ELECTRONIQUE RADIO PLANS, Bd.2429, Nr.540, November 1992, PARIS FR Seiten 43 - 45, XP320741 PATRICK GUEULLE 'Prise téléphonique autoreégulée pour matériels non agréés'

## Beschreibung

Die Erfindung betrifft ein elektrisches und mechanisches Schnittstellen-System für die Uebertragung von elektrischen Zeichen und Schallwellen in analoger und/oder digitaler Form von einem Kommunikationsendgerät auf ein Fernmeldenetz eines Staates.

Für die elektrische Kommunikation besteht seit langem ein weltumspannendes Leitungssystem, nämlich das sogenannte Fernmeldenetz, das den staatlichen Territorien und den Fernmeldemonopolen entsprechend von den einzelnen Staaten souverän gestaltet, organisiert, unterhalten und betrieben wird. Als Folge dieser Monopole verwenden kaum mehr als zwei Staaten dieser Erde formgleiche und mechanisch zueinander passende Telefonsteckdosen und Telefonstecker. Da Manipulationen an den Telefonsteckdosen zum Ausfall der Haustelefonanlage oder zu Störungen im Fernmeldenetz führen können, ist im staatlichen Internum jede Manipulation an den Telefonsteckdosen und den Telefonsteckern verboten, respektive konzessionierten Fachleuten vorbehalten.

Eine andere Tatsache ist, dass der Zwang der Abonnenten zur Miete von Endgeräten im Sinne der fortschreitenden Liberalisierung des Fernmeldewesens in mehr und mehr Staaten abgeschafft und der freie Erwerb von Endgeräten für jedermann gestattet wird. Der Vorteil dieser Freizügigkeit endet bei einer Verlegung des Wohnsitzes ins Ausland, weil im Ausland die Netzanschlüsse grundsätzlich verschieden von zuhause sind. Auf gleiche Hindernisse stossen Geschäfts- und Medienleute wie auch Urlauber, die während ihres Auslandaufenthaltes eigene Kommunikationsendgeräte wie etwa Telefon- und Telefaxapparate, Kleinrechner oder Terminals mit Modemanschluss von einem Hotelzimmer oder von einer Ferienwohnung aus verwenden wollen.

Um die Vorzüge und den Komfort eigener Endgeräte mit den Vorteilen, zum Beispiel dem Ausnützen des preisgünstigen Nachttarifs, und den Chancen der individuellen und freien Datenfernübertragung trotz der geschilderten Schwierigkeiten nützen zu können, sind Schnittstellen im Gebrauch, die den Handapparat des Telefons verwenden, um die Kopplung zur Uebertragungsleitung mittels akustischer Schwingungen herzustellen. Diese akustischen Koppler (DIN 44 302) sind jedoch unbeliebt, weil sie im Gebrauch umständlich sind und ausserdem oft Quelle von Uebertragungsfehlern und Störungen sind. Ausserdem gelten sie als zu langsam und daher wegen der langen Linienbelegung zu teuer für die Datenfernübertragung. Deshalb wird oft Hand an die Steckdose gelegt, ohne Rücksicht auf die elektrische und mechanische Eigenart bzw. den Standard oder die Norm des nationalen Fernmeldenetzes, um das Endgerät, zum Beispiel einen Rechner, trotz der erwähnten Hindernisse direkt ans Netz anzuschliessen, was jedoch oft von unerwünschten negativen Folgen begleitet ist.

Zur Vermeidung solcher Praktiken ist ein Adapter nach den Normen der Deutschen Bundespost und des US-Systems in der DE 39 41 398 vorgeschlagen worden. Der Nachteil dieser Lösung liegt darin, dass sie punktuell ist, das heisst, sie gilt ausschliesslich für die Nutzung von Kommunikationsendgeräten nach dem US-System innerhalb von Deutschland. Das Prinzip dieses Adapters lässt, bei Ignoranz des Problems der elektrischen Eigenart nationaler Fernmeldenetze, an rein mechanische Lösungen denken und ausserdem nur an solche für analoge Uebertragungen für die Benützung beispielsweise der Endgeräte nach dem US-System mit einem anderen spezifischen Adapter innerhalb von England, oder mit wieder einem anderen spezifischen Adapter zur Benützung des Endgerätes nach dem US-System innerhalb von Frankreich, usw. Für die Benützung der Endgeräte nach dem US-System in jedem einzelnen der etwa 170 weiteren Staaten dieser Welt ist ein jeweils spezifischer Adapter nötig! Das Gleiche gilt für Endgeräte mit jedem anderen länderspezifischen Anschluss-System!

In der Offenlegungsschrift DE 35 22 582 wird ein Steckerkabel zum Anschliessen eines Telekommunikationsendgerätes für ausschliesslich analoge Uebertragungen offenbart. Das Steckerkabel ist wandseitig mit einem Kabelstecker versehen, auf den im Inneren seines Gehäuses ein zweiter Kabelstecker aufgesteckt ist. Dieser ist an einem Verbindungskabel angeschlossen, das an seinem anderen Ende mit dem dritten Kabelstecker verbunden ist, der dem zweiten Kabelstecker gleich ist. Dieses Steckerkabel dient zur Verbindung eines Endgerätes mit einer Wandanschlussdose, die ein anderes Funktionsmass aufweist als das Steckerkabel. Dieses Steckerkabel weist jedoch kein Konvertermodul auf und ist also nicht modular komponierbar.

Der Erfindung liegt daher die Aufgabe zugrunde, ein länderübergreifendes und somit internationales Schnittstellen-System für die individuelle Datenfernübertragung zu schaffen, das professionell gestaltet ist und daher sowohl den elektrischen wie mechanischen Eigenarten der angesprochenen Fernmeldenetze als auch dem länderspezifischen System des Endgerätes des Anwenders Rechnung trägt und je nach Ausführungsform modular so aufgebaut ist, dass nur ein Teil der Schnittstelle je nach Erweiterung der Anwendung ausgetauscht werden muss.

Erfindungsgemäss wird diese Aufgabe durch ein Schnittstellen-System mit den kennzeichnenden Merkmalen des Anspruchs 1 gelöst.

Die mit der Erfindung erreichten Vorteile sind im wesentlichen darin zu sehen, dass dank der Erfindung die den jeweils individuellen Bedürfnissen entsprechenden Kommunikationsendgeräte vom Benützer ohne zeitliche Verzögerung, sowie mechanisch und elektrisch passend, international einsetzbar sind, und dass der Einsatz schnell, problemlos und ohne Gefährdung der Fernmeldenetze durch Kurzschlüsse sowie ohne Gefährdung des Endgerätes, etwa durch elektrische Schläge von Unwettern in das Fernmeldenetz, sowie auch gefahrlos für den Anwender erfolgen kann.

Anhand der beiliegenden Zeichnungen wird die Erfindung beispielsweise erläutert.

Es zeigen:
- Figur 1 :: Eine schematische Darstellung des Einsatzes einer Schnittstelle gemäss dem Schnittstellen-System;
- Figur 2 :: Ein Blockschema dieser Schnittstelle.

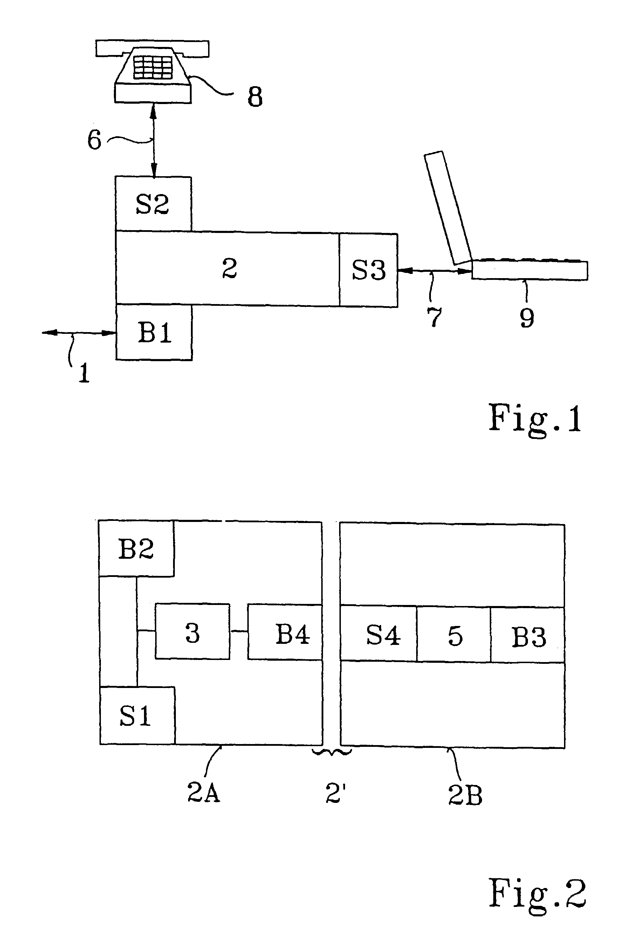

Die schematische Darstellung der Figur 1 zeigt ein Fernmeldenetz 1 eines Staates, für analoge und/oder digitale Uebertragungen, mit der Telefonsteckdose B1 und dem netz-identischen Telefonanschluss S2,6,8, bestehend aus dem Telefonstecker S2, der Telefonleitung 6 und dem Telefongerät 8, sowie einer zwischen diese Installation gesetzten Schnittstelle 2, die zum Anschluss beispielsweise eines tragbaren Rechners 9 als Kommunikationsendgerät mit Modemleitung 7 und Modemstecker S3 dient. Die Ausführung der Schnittstelle 2 fügt sich zwischen die übliche Telefoninstallation ein und erlaubt die parallele Benützung des Telefons 8 und des Kommunikationsendgerätes 9.

Das modular und komponierbar aufgebaute Schnittstellen-System besteht nun aus Schnittstellen 2, die gemäss Figur 2 je nach Ausführungsform ein auswechselbares, länderspezifisches, dem jeweiligen Fernmeldenetz 1 im eingangs erwähnten Sinne entsprechendes Konvertermodul 2A einschliessen, und weiter ebenfalls je nach Ausführungsform mindestens einen schnittstellenimmanenten Adapter 2B, der vom Anwender des Kommunikationsendgerätes ausgetauscht werden kann, sowie eine Lösbare Verbindung 2'. Das Konvertermodul 2A weist einen netz-identischen Stecker S1 und eine netz-identische Buchse B2 für den parallelen Telefonanschluss auf, sowie eine gemeinsame Verzweigung der Leitungen zum Konverter 3. Das Konvertermodul 2A entspricht mechanisch und elektrisch der Ausbildung und den Anforderungen der Steckdose B1 des Fernmeldenetzes 1. Die Belegung der Kupplung B3 des schnittstellen-immanenten Adapters 2B auf der dem Endgerät zugedachten Seite entspricht dem Stecker S3 des Kommunikationsendgerätes 9. Im Konverter 2A wird die Uebereinstimmung der Linienbelegung des Fernmeldenetzes 1 mit der Kontaktbelegung der Buchse, je nach Ausführungsform, für das Verbindungskabel B4 entsprechend dem system-immanenten Adapter 2B sowie je nach Bedarf die Anpassung der Ausgänge der Buchse B4 der Netzimpedanz vorgenommen. Der system-immanente Adapter 2B weist je nach Ausführungsform ein lösbar gestecktes, biegsames Verbindungskabel 5 als Verbindung 2' zwischen dem Konvertermodul 2A der Schnittstelle 2 und derem schnittstellen-immanenten Adapter 2B auf, an dessen Enden auf der einen Seite je nach Ausführungsform der mit der Buchse B4 kompatible Stecker S4 und auf der anderen Seite die Modembuchse B3 angeschlossen ist. Für die Anschlüsse B4,S4 eignet sich idealerweise das Buchsen-(B4)/Stecker-(S4)-System vom Typ Digital-Equipment-Corporation (Digital-Equipment-Corporation = Modified Modular Connector/Plug), weil es bewährt ist, sich zugleich aber von allen gebräuchlichen Steckverbindungen so unterscheidet, dass es zu keinen Verwechslungen Anlass geben kann. Das Verbindungskabel 5 ist je nach Ausführungsform vorteilhaft biegsam, um eine ideale räumliche Anpassung für das Anschliessen des Kommunikationsendgerätes 9 zu schaffen. Es versteht sich, dass an der mit der Modembuchse B3 bezeichneten Stelle allerlei Endgeräte wie Telefone, Telefax-Geräte, Rechner, Modems und Terminals anschliessbar sind.

## Patentansprüche

1. Elektrisches und mechanisches Schnittstellen-System für die Uebertragung von elektrischen Zeichen und Schallwellen in analoger und/oder digitaler Form von einem Kommunikationsendgerät (9) auf ein Fernmeldenetz (1) eines Staates, *dadurch gekennzeichnet,* dass es aus Schnittstellen (2) besteht, die für den Anwender des Kommunikationsendgerätes (9) modular (2A,2B) und komponierbar aufgebaut sind, und mindestens aus einem schnittstellen-immanenten, für den Anwender des Kommunikationsendgerätes (9) austauschbaren Adapter (2B) zum Anschliessen des Kommunikationsendgerätes (9) und aus einem auswechselbaren, dem jeweiligen Fernmeldenetz (1) entsprechenden Konvertermodul (2A) bestehen, und somit der Stecker (S1) des Konvertermoduls (2A) mechanisch und elektrisch der Ausbildung und den Anforderungen der Steckdose (B1) und des Fernmeldenetzes (1) entspricht, und die adapterseitige Belegung der Kupplung (B3) des schnittstellen-immanenten Adapters (2B) dem Stecker (S3) des Kommunikationsendgerätes (9) entspricht, wobei ein lösbar gestecktes, biegsames Kabel (5) als Verbindung (2') zwischen dem Konvertermodul (2A) der Schnittstelle und dem schnittstellen-immanenten Adapter (2B) dient, und für diese Verbindung der schnittstellenimmanente Adapter (2B) einen Stecker (S4) und das Konvertermodul (2A) eine Kupplung (B4) aufweist.

2. Elektrisches und mechanisches Schnittstellen-System nach Anspruch 1, *dadurch gekennzeichnet,* dass als lösbare Verbindung zwischen dem Konvertermodul (2A) der Schnittstellen einerseits und dem Verbindungskabel (5) des Adapters (2B) andrerseits ein Buchsen (B4)/Stecker-(S4)-System vom Typ Digital-Equipment-Corporation dient.

3. Elektrisches und mechanisches Schnittstellen-System nach Anspruch 1 oder 2, *dadurch gekennzeichnet,* dass das Konvertermodul (2A) der Schnittstellen (2) eine netz-identische Buchse (B2) für einen parallelen Telefonanschluss (S2,6,8) aufweist.

## Claims

1. Electrical and mechanical interface-system for the transmission of electrical characters and sound waves in the analogue and/or digital form from a communication terminal (9) to the telecommunication network (1) of a country, characterized in that it consists of interfaces (2) which are designed modular (2A,2B) and composable for the user of the communication terminal (9), and of at least one interface-inherent adapter (2B), which is exchangeable for the user of the communication terminal (9) for the connection of communication terminals (9), and of an exchangeable converter module (2A) conforming to the respective telecommunication network (1), and therefore the plug (S1) of the converter module (2A), mechanically and electrically conforms to the design and requirements of the plug socket (B1) and the telecommunication network (1), and the occupancy of the coupling (B3) on the adapter's side of the interface-inherent adapter (2B) conforms to the plug (S3) of the communication terminal (9), whereby a separably connected, flexible cable (5) serves as the connection (2') between the converter module (2A) of the interface and the interface-inherent adapter (2B), and for this connection the interface-inherent adapter (2B) has a plug (S4) and the converter module (2A) has a connector (84).

2. Electrical and mechanical interface-system according to claim 1, characterized in that the separable connection between the converter module (2A) of the interface and with the connection cable (5) of the adapter (2B) is made of a connector (B4)/plug-(S4)-system of the type Digital-Equipment-Corporation.

3. Electrical and mechanical interface-system according to claims 1 or 2, characterized in that the converter module (2A) of the interface (2) has a network-identical plug socket (B2) for a parallel telephone connection (S2,6,8).

## Revendications

1. Système électrique et mécanique d'interfaces pour la transmission de signaux électriques et d'ondes sonores sous forme analogique et/ou numérique depuis un terminal de communication (9) vers un réseau de télécommunication (1) d'un Etat, *caractérisé en ce qu'*il se compose d'interfaces (2), qui ont pour l'utilisateur du terminal de communication (9) une structure modulable (2A, 2B) et configurable et sont composées d'au moins un adaptateur (2B) immanent aux interfaces et échangeable pour l'utilisateur du terminal de communication (9), cet adaptateur étant destiné au raccordement du terminal de communication (9), ainsi que d'un module de convertisseur échangeable (2A) destiné au réseau de télécommunication correspondant (1), et qu'ainsi la fiche mâle (S1) du module de convertisseur (2A) correspond mécaniquement et électriquement à la réalisation et aux exigences de la prise de courant (B1) et du réseau de télécommunication (1), cependant que l'affectation des contacts - placés du côté de l'adaptateur (28) - du connecteur (B3) de l'adaptateur (2B) immanent aux interfaces correspond à la fiche mâle (S3) du terminal de communication (9), un câble souple (5), enfiché de manière amovible, étant utilisé comme liaison (2') entre le module de convertisseur (2A) de l'interface et l'adaptateur (2B) immanent aux interfaces, cependant que, pour cette liaison, cet adaptateur (2B) présente une fiche mâle (S4) et que le module de convertisseur (2A) présente un connecteur (B4).

2. Système électrique et mécanique d'interface suivant la revendication 1, *caractérisé en ce qu*'entre le module de convertisseur (2A) des interfaces, d'une part, et le câble de liaison (5) de l'adaptateur (2B) d'autre part, il est utilisé, comme liaison amovible, un système de douilles de connexion (B4) et de fiches mâles (S4) du type Digital Equipment Corporation.

3. Système électrique et mécanique d'interface suivant la revendication 1 ou 2, *caractérisé en ce que* le module de convertisseur (2A) des interfaces (2) présente une douille de connexion (B2) conforme au réseau, pour un raccordement téléphonique en parallèle (S2, 6, 8).
